# EUROPÄISCHE PATENTANMELDUNG

(11) **EP 3 795 857 A1**
(43) Veröffentlichungstag der Anmeldung: **24.03.2021**
(21) Anmeldenummer: 19198412.9
(22) Anmeldetag: 19.09.2019
(51) Int. Cl.: F16F 1/373, F16F 1/38, F16F 1/50

(54) **TORSIONSFEDERVORRICHTUNG, LAGER UND SCHWINGUNGSDÄMPFER**

(71) Anmelder: Rosta AG, 5502 Hunzenschwil (CH)
(72) Erfinder: KRAMER, Erich, 5200 Brugg (CH); MOLLENKOPF, Marc, 4127 Birsfelden (CH); MANHART, Bruno, 5023 Biberstein (CH); SCHMITTER, Fabian, 8918 Unterlunkhofen (CH)
(74) Vertreter: EGLI-EUROPEAN PATENT ATTORNEYS

(57) **Zusammenfassung**

Torsionsfedervorrichtung (1, 101-106) umfassend ein Aussengehäuse (2), ein im Aussengehäuse (2) angeordnetes Innengehäuse (3) und ein elastisches Element (4). Das elastische Element (4) lagert das Innengehäuse (3) relativ zum Aussengehäuse (3) derart, dass bei einer Auslenkung durch ein Verdrehen des Aussengehäuses (2) und des Innengehäuses (3) relativ zueinander eine Rückstellkraft zwischen dem Aussengehäuse (2) und dem Innengehäuse (3) aufgebaut wird. Die Rückstellkraft-Auslenkungs-Kurve ist durch eine Wahl von Form und/oder Material des Aussengehäuses (2), des Innengehäuses (3) und des elastischen Elements (4) einstellbar ist und/oder wobei die Hysterese durch eine Wahl von Form und/oder Material des Aussengehäuses (2), des Innengehäuses (3) und des elastischen Elements (4) einstellbar

## Beschreibung

### Technisches Gebiet

Die vorliegende Erfindung bezieht sich auf ein Torsionsfedervorrichtung sowie ein Lager und einen Schwingungsdämpfer mit einer Torsionsfedervorrichtung.

### Stand der Technik

Aus dem Stand der Technik ist ein Gummifederelement bekannt, welches ein Aussengehäuse (z.B. ein Stahlgussteil oder ein Stahlformrohr) und ein hierin eingesetztes Innengehäuse enthält. In den Zwischenräumen zwischen dem Aussengehäuse und dem winkelversetzt dazu angeordneten Innengehäuse sind jeweils elastische Gummistränge angeordnet. Die elastischen Gummistränge lagern das Innengehäuse mittig im Aussengehäuse. Bei einem Verdrehen der Gehäuse relativ zueinander ausgehend von einer Ruhelage (Verdrehen um einen Auslenkungswinkel) wird eine Rückstellkraft aufgebaut.

Beispielsweise in der DE 936 835 C ist ein torsionselastisches Federungselement beschrieben, welches aus einem aussenseitig polygonalen Innenteil, der konzentrisch in einem innenseitig polygonalen Aussenteil von gleicher Kantenzahl liegt, besteht. Innenteil und Aussenteil werden durch Zwischenlagerung der entsprechenden Anzahl elastischer Walzen gehalten.

In der DE 20 2009 010 675 U1 ist ein Gummifedersystem beschrieben, welches ein Aussengehäuse, ein um 45° versetztes Vierkantprofil sowie vier schwingungsdämpfende Gummikörper umfasst.

Es sind ferner Schwingungsdämpfer, d.h. elastische Lager zur Schwingungsdämpfung bekannt, welche Torsionsfedern der beschriebenen Art umfassen.

Vorrichtungen der im Stand der Technik beschriebenen Art werden auch als "Neidhart-Federn", "Neidhart-Federelemente", "Neidhart-Federvorrichtungen" o.ä. bezeichnet.

Vorrichtungen der im Stand der Technik beschriebenen Art können zum Federn, Dämpfen und Lagern verwendet werden.

Die Federeigenschaften der im Stand der Technik beschriebenen Gummifederelemente werden durch die Gummikörper realisiert, welche die Schwingungen aufnehmen und gleichzeitig die Befestigung und Lagerung des Innengehäuses gewährleisten.

Die Rückstellkraft als Funktion der Auslenkung in Form einer Drehung wird durch die Rückstellkraft-Auslenkungs-Kurve abgebildet. Diese Kurve kann auch als "Kraft-Auslenkungs-Kurve" oder "charakteristische Kurve" oder "Federkennlinie" der Torsionsfedervorrichtung bezeichnet werden. Sie entspricht dem Prinzip nach der Kraft-Weg-Kennlinie einer Spiralfeder, bei der die Auslenkung linear ist.

Nachteilig an den herkömmlichen Gummifederelementen ist, dass die Rückstellkraft-Auslenkungs-Kurve für kleine Auslenkungen relativ flach, jedoch ab einer bestimmten Auslenkung relativ steil verläuft. Der Übergang vom flachen in den steilen Bereich ist dabei typischerweise abrupt, d.h. die Rückstellkraft-Auslenkungs-Kurve weist beim Übergang einen Knick auf. Mitunter verläuft die Rückstellkraft-Auslenkungs-Kurve dann so steil, dass der weiteren Drehbewegung abrupt ein sehr grosser Widerstand entgegensteht und sie damit gewissermassen gegen einen harten Anschlag stösst. Bei weiterer Belastung können die Gummikörper überdehnt und dadurch beschädigt werden.

Durch den steilen Verlauf bei grösseren Auslenkungen ist der Einsatzbereich der herkömmlichen Gummifederelemente beschränkt, sodass diese für Anwendungen, bei denen grössere Auslenkungen auftreten, nicht als Torsionsfederelemente eingesetzt werden können.

Nachteilig an den herkömmlichen Gummifederelementen ist ferner, dass die mögliche Auslenkung auf Rotationswinkel von typischerweise 30° ausgehend von der Ruhelage beschränkt ist. Nachteilig an den herkömmlichen Gummifederelementen ist ferner, dass ihre Form typischerweise von der Form der für deren Gehäuse zu verwendenden Vierkantprofile beschränkt ist. Nachteilig an den herkömmlichen Gummifederelementen ist ferner ihr typischerweise hohes Gewicht. Ferner lassen sich herkömmliche Gummifederelemente schwer miniaturisieren. Da sie neben dem Gehäuse typischerweise viele weitere Teile umfassen, ist ausserdem ihre Herstellung relativ kompliziert, da die Teile zusammengebaut werden müssen. Darüber hinaus sind herkömmliche Gummifederelemente - insbesondere aufgrund des Aufbaus aus vielen Einzelteilen - im Bereich der Lebensmittelherstellung typischerweise nicht einsetzbar.

### Zusammenfassung der Erfindung

Eine der vorliegenden Erfindung zugrundeliegende Aufgabe besteht darin, einen oder mehrere der genannten Nachteile zu vermeiden sowie eine verbesserte Torsionsfedervorrichtung, ein verbessertes Lager und einen verbesserten Schwingungsdämpfer bereitzustellen.

Diese Aufgabe wird gelöst durch eine Torsionsfedervorrichtung gemäss Patentanspruch 1 oder eine Torsionsfedervorrichtung gemäss Patentanspruch 2, das Lager gemäss Patentanspruch 19 und den Schwingungsdämpfer gemäss Patentanspruch 20. Weiterbildungen der Erfindung sind in den Unteransprüchen angegeben. Die in den Unteransprüchen zu der Torsionsfedervorrichtung genannten Merkmale und die auf Torsionsfedervorrichtung bezogenen, weiter unten in der Beschreibung angeführten Merkmale können auch als Weiterbildung des erfindungsgemässen Lagers und des erfindungsgemässen Schwingungsdämpfers verstanden werden und umgekehrt.

Die erfindungsgemässe Torsionsfedervorrichtung gemäss einem ersten Aspekt der Erfindung umfasst ein Aussengehäuse, ein im Aussengehäuse angeordnetes Innengehäuse und ein elastisches Element, welches das Innengehäuse relativ zum Aussengehäuse so lagert, dass bei einer Auslenkung durch ein Verdrehen des Aussengehäuses und des Innengehäuses relativ zueinander eine Rückstellkraft zwischen dem Aussengehäuse und dem Innengehäuse aufgebaut wird, wobei
die Rückstellkraft-Auslenkungs-Kurve durch eine Wahl von Form und/oder Material des Aussengehäuses, des Innengehäuses und des elastischen Elements einstellbar ist und/oder wobei die Hysterese durch eine Wahl von Form und/oder Material des Aussengehäuses, des Innengehäuses und des elastischen Elements einstellbar ist.

Unter einer Torsionsfedervorrichtung wird eine Vorrichtung verstanden, in der eine Rückstellkraft durch eine Auslenkung aus einer Ruhelage in Form einer Drehung aufgebaut wird. Die Rückstellkraft als Funktion der Auslenkung entspricht der Rückstellkraft-Auslenkungs-Kurve.

Unter "Hysterese" wird die Hysterese des elastischen Verhaltens der Torsionsfedervorrichtung, d.h. die Hysterese der Rückstellkraft-Auslenkungs-Kurve verstanden.

Erfindungsgemäss kann demnach das elastische Verhalten (Rückstellkraft-Auslenkungs-Relation und/oder Hysterese) eingestellt bzw. angepasst werden, beispielsweise so, dass die Rückstellkraft-Auslenkungs-Kurve flach oder steil bzw. symmetrisch (insbesondere linear) oder asymmetrisch (beispielsweise linear bei Auslenkungen in die eine Drehrichtung und progressiv bei Auslenkungen in die andere Drehrichtung) ist, oder so, dass sich eine starke oder schwache Dämpfungswirkung ergibt. Eine grosse Dämpfungswirkung ist beispielsweise in Anwendungen zum Prallschutz, bei denen hohe Prallenergien auftreten, erwünscht. Erfindungsgemäss kann das elastische Verhalten an die Anforderungen der jeweiligen Anwendung angepasst werden.

Insbesondere kann erfindungsgemäss beispielsweise verhindert werden, dass bei starken Auslenkungen (Drehbewegungen bei denen grosse Drehwinkel zurückgelegt werden) eine zu hohe Rückstellkraft aufgebaut wird und eine Federung oder Dämpfung bei grossen Auslenkungen nicht mehr zufriedenstellend möglich ist. Die erfindungsgemässe Torsionsfedervorrichtung ist somit für Anwendungen geeignet, bei denen starke Auslenkungen auftreten, da das zu federnde oder zu dämpfende Objekt (beispielsweise eine vibrierende Maschine oder eine vibrierende Aufhängung) auch im Falle starker Auslenkungen (Vibrationen mit grosser Amplitude) zuverlässig und effektiv gefedert bzw. gedämpft wird. Auf diese Weise lassen sich beispielsweise auch starke Stösse zuverlässig dämpfen. Ferner kann beispielsweise verhindert werden, dass die elastischen Elemente der Torsionsfedervorrichtung aufgrund zu hoher Rückstellkräfte überdehnt und dadurch beschädigt werden. Durch eine zuverlässige und effektive Federung oder Dämpfung im Falle starker Auslenkungen (Vibrationen) können auch Beschädigungen des gefederten bzw. gedämpften Objekts vermindert werden. Ausserdem werden Gegenstände und Personen, die sich im Bereich dieses Objekts aufhalten, vor harten Rüttel- oder Stossbewegungen geschützt.

Die erfindungsgemässe Torsionsfedervorrichtung gemäss einem zweiten Aspekt der Erfindung umfasst ein Aussengehäuse, ein im Aussengehäuse angeordnetes Innengehäuse und ein elastisches Element, welches das Innengehäuse relativ zum Aussengehäuse so lagert, dass bei einer Auslenkung durch ein Verdrehen des Aussengehäuses und des Innengehäuses relativ zueinander eine Rückstellkraft zwischen dem Aussengehäuse und dem Innengehäuse aufgebaut wird, wobei das elastische Element einstückig gebildet ist.

Dadurch kann es beispielsweise möglich sein, dass das elastische Verhalten der Torsionsfedervorrichtung angepasst werden kann. Ferner kann sich dadurch beispielsweise die Herstellung der Torsionsfedervorrichtung vereinfachen lassen. Darüber hinaus kann dadurch beispielsweise eine Miniaturisierung der Torsionsfedervorrichtung möglich sein.

Bevorzugt besteht das Aussengehäuse zumindest teilweise aus mindestens einem Kunststoffmaterial, wobei das Kunststoffmaterial mehr bevorzugt mindestens einen Copolyester umfasst, wobei der Copolyester noch mehr bevorzugt ein thermoplastischer Copolyester ist, wobei der Copolyester am meisten bevorzugt ein niedrigschmelzender thermoplastischer Copolyester ist. Besonders bevorzugt besteht das Aussengehäuse aus Tritan® 1501 und/oder PA12-GF50 und/oder PTB-GF 50.

Bevorzugt besteht das Innengehäuse zumindest teilweise aus mindestens einem Kunststoffmaterial, wobei das Kunststoffmaterial mehr bevorzugt mindestens einen Copolyester umfasst, wobei der Copolyester noch mehr bevorzugt ein thermoplastischer Copolyester ist, wobei der Copolyester am meisten bevorzugt ein niedrigschmelzender thermoplastischer Copolyester ist. Besonders bevorzugt besteht das Innengehäuse aus Tritan® 1501 und/oder PA12-GF50 und/oder PTB-GF 50. Aussengehäuse und Innengehäuse können das gleiche Material oder verschiedene Materialien umfassen.

Bevorzugt umfasst das elastische Element ein elastisches Material, mehr bevorzugt ein Elastomer, wobei es sich bei dem Elastomer noch mehr bevorzugt um ein strahlenvernetzbares Elastomer, insbesondere um TPE-E, handelt.

Durch eine entsprechende Wahl der Materialien für das Aussengehäuse, das Innengehäuse und/oder das elastische Element kann beispielsweise die Anpassung des elastischen Verhaltens der Torsionsfedervorrichtung in bevorzugter Weise erreicht werden. Beispielsweise können insbesondere niedrigschmelzende Thermoplaste eine gute Schwingungsanbindung mit dem elastischen Element haben. Ferner können beispielsweise Materialien verwendet werden, die sich aufgrund ihrer Beschaffenheit für den jeweiligen Anwendungsbereich eignen, beispielsweise solche Materialien, die den speziellen Materialanforderungen der Lebensmittelindustrie hinsichtlich Ungiftigkeit, Hygiene, Reinigungsmöglichkeit etc. genügen. Ferner können beispielsweise Materialien verwendet werden, die eine Miniaturisierung der Torsionsfedervorrichtung zulassen und/oder eine leichte Torsionsfedervorrichtung ergeben.

Bevorzugt werden die Materialien so gewählt, dass sich das elastische Element gut mit dem Innengehäuse und/oder dem Aussengehäuse verschmelzen lässt, damit eine gute Haftung entsteht. Dafür ist es vorteilhaft, wenn für das Innengehäuse und das Aussengehäuse niedrigschmelzende Materialien verwendet werden. Ferner ist bevorzugt, dass das Material des elastischen Elements strahlenvernetzbar sein; dadurch kann beispielsweise dessen Verhalten dem Verhalten von Kautschuk angenähert werden. TPE ist als Material für das elastische Element aufgrund seiner Verschmelzbarkeit, insbesondere wenn niedrigschmelzende Kunststoffmaterialien für das Aussengehäuse und das Innnengehäuse verwendet werden, besonders bevorzugt.

Bevorzugt kleidet ein erster Bereich des elastischen Elements das Aussengehäuse an dessen Innenflächen zumindest teilweise aus, während ein zweiter Bereich des elastischen Elements das Innengehäuse an dessen Aussenflächen zumindest teilweise ummantelt und wobei zwischen dem ersten und dem zweiten Bereich des elastischen Materials ein dritter Bereich des elastischen Materials in Form von Stegen angeordnet ist. Weiter bevorzugt sind die Stege als durchgängige Stränge gebildet und/oder schraubenförmig angeordnet. Weiter bevorzugt erstrecken sich die Stege vom Bereich der Innenkanten des Aussengehäuses zum Bereich der Aussenflächen des Innengehäuses.

Bevorzugt ist das elastische Element mit dem Aussengehäuse und dem Innengehäuse verschmolzen, wobei optional zur Haftunterstützung Hinterschnitte am Aussengehäuse und/oder am Innengehäuse vorgesehen sind. Dadurch kann beispielsweise die Torsionsfedervorrichtung auf einfache Art und Weise hergestellt werden.

Bevorzugt handelt es sich bei dem Aussengehäuse um ein hohles Mehrkantprofil mit offenen Enden, wobei das Mehrkantprofil mehr bevorzugt einen polygonalen, n-eckigen Querschnitt aufweist, wobei n mehr bevorzugt aus der aus 3, 4 und 6 bestehenden Gruppe ausgewählt ist, wobei n am meisten bevorzugt 4 ist.

Bevorzugt es sich bei dem Innengehäuse um ein im Inneren des Aussengehäuses angeordnetes Mehrkantprofil, wobei das Mehrkantprofil mehr bevorzugt einen polygonalen, n-eckigen Querschnitt aufweist, wobei n noch mehr bevorzugt aus der aus 3, 4 und 6 bestehenden Gruppe ausgewählt ist, wobei n am meisten bevorzugt 4 ist.

n kann für das Aussengehäuse und das Innengehäuse denselben Wert aufweist, und das Aussengehäuse und das Innengehäuse können insbesondere um 180°/n bezüglich einer gemeinsamen Längsachse gegeneinander winkelversetzt sein.

Durch eine entsprechende Wahl der Geometrie des Aussengehäuses, des Innengehäuses und/oder des elastischen Elements kann beispielsweise die Anpassung des elastischen Verhaltens der Torsionsfedervorrichtung in bevorzugter Weise erreicht werden.

Bevorzugt weist das Innengehäuse mindestens eine Durchgangsbohrung und/oder ein Durchgangsloch und/oder Sacklöcher zur Verbindung des Innengehäuses mit einem nicht zur Torsionsfedervorrichtung gehörenden Bauteil auf. Dadurch kann beispielsweise auf einfache Art und Weise eine Verbindung zwischen diesem Bauteil und dem Innengehäuse erreicht werden.

Bevorzugt die Torsionsfedervorrichtung mittels eines Spritzgussverfahrens hergestellt. Dadurch kann beispielsweise vermieden werden, dass die Komponenten einzeln hergestellt und anschliessend in einem zusätzlichen Schritt zusammengesetzt werden müssen.

Das erfindungsgemässe Lager umfasst mindestens eine erfindungsgemässe Torsionsfedervorrichtung.

Der erfindungsgemässe Schwingungsdämpfer umfasst mindestens eine erfindungsgemässe Torsionsfedervorrichtung.

### Kurze Beschreibung der Zeichnungen

Weitere Einzelheiten und Zweckmässigkeiten der Erfindung sowie insbesondere beispielhafte Ausführungsformen der erfindungsgemässen Torsionsfedervorrichtung, des erfindungsgemässen Lagers und des erfindungsgemässen Schwingungsdämpfers werden im Folgenden unter Bezugnahme auf die beigefügten Zeichnungen beschrieben. Die einzelnen Merkmale der Ausführungsformen können, soweit sinnvoll, beliebig miteinander kombiniert werden.
- Fig. 1: zeigt eine schematische Schrägansicht einer Torsionsfedervorrichtung gemäss einer ersten Ausführungsform der vorliegenden Erfindung.
- Fig. 2: zeigt eine schematische Seitenansicht der Torsionsfedervorrichtung gemäss der ersten Ausführungsform.
- Fig. 3: zeigt eine Spannungsverteilung (FEM-Simulation) eines elastischen Elements der Torsionsfedervorrichtung gemäss der ersten Ausführungsform.
- Fig. 4: zeigt eine schematische Schrägansicht der Torsionsfedervorrichtung gemäss einer zweiten Ausführungsform.
- Fig. 5: zeigt eine schematische Schrägansicht der Torsionsfedervorrichtung gemäss einer dritten Ausführungsform.
- Fig. 6: zeigt eine schematische Schrägansicht der Torsionsfedervorrichtung gemäss einer vierten Ausführungsform.
- Fig. 7: zeigt eine schematische Schrägansicht der Torsionsfedervorrichtung gemäss einer fünften Ausführungsform.
- Fig. 8: zeigt eine schematische Schrägansicht der Torsionsfedervorrichtung gemäss einer sechsten Ausführungsform.
- Fig. 9: zeigt eine schematische Schrägansicht der Torsionsfedervorrichtung gemäss einer siebenten Ausführungsform.
- Fig. 10: zeigt eine schematische Seitenansicht eines Lagers gemäss einer achten Ausführungsform.
- Fig. 11: zeigt eine schematische Seitenansicht eines Schwingungsdämpfers gemäss einer neunten Ausführungsform.
- Fig. 12: zeigt eine schematische Seitenansicht eines Schwingungsdämpfers gemäss einer zehnten Ausführungsform.

### Beschreibung von Ausführungsformen

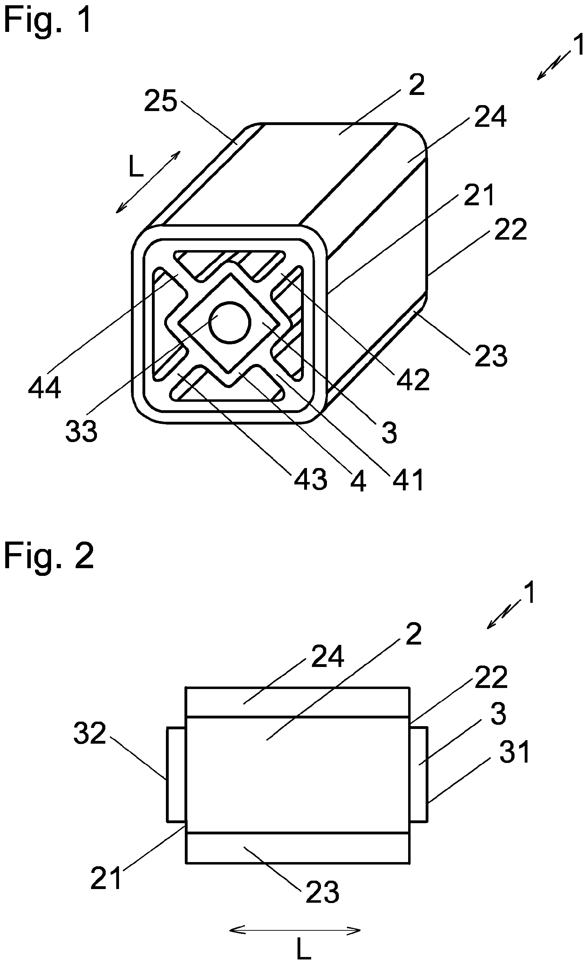

In Fig. 1 ist eine Schrägansicht einer Torsionsfedervorrichtung 1 gemäss einer ersten Ausführungsform der vorliegenden Erfindung dargestellt. Fig. 2 zeigt die Torsionsfedervorrichtung 1 gemäss der ersten Ausführungsform von der Seite.

Die Torsionsfedervorrichtung 1 umfasst ein Aussengehäuse 2. Bevorzugt besteht das Aussengehäuse 2 aus einem Kunststoffmaterial, bevorzugt aus einem hochbelastbaren Kunststoffmaterial, insbesondere einem Material auf der Basis von Copolyestern. Gemäss einer konkreten Ausführungsform der Erfindung besteht das Aussengehäuse 2 zumindest im Wesentlichen aus dem thermoplastischen Copolyester mit dem Handelsnamen Tritan® 1501. In alternativen Ausführungsformen besteht das Aussengehäuse 2 zumindest im Wesentlichen aus einem niedrigschmelzenden Thermoplasten, beispielsweise aus PA12-GF50 oder PTB-GF 50.

In einer alternativen Ausführungsform besteht das Aussengehäuse 2 beispielsweise aus einem metallischen Material. Beispielsweise kann das Aussengehäuse als Stahlgussbauteil ausgeführt sein. Darüber hinaus ist es möglich, dass das Aussengehäuse 2 aus einer Kombination aus einem oder mehreren Kunststoffen und/oder einem oder mehreren Metallen oder aus einer anderen Materialkombination besteht.

Das Aussengehäuse 2 kann an seiner Aussenseite beispielsweise durch eine Lackierung oder eine Beschichtung mit einer bestimmten Farbe versehen werden. Bevorzugt kann jedoch ein Kunststoffmaterial mit einer bestimmten Farbe für das Aussengehäuse verwendet werden, um diesem diese Farbe zu verleihen.

Gemäss der vorliegenden Ausführungsform handelt es sich bei dem Aussengehäuse 2 um ein entlang seiner Längserstreckung L (Längsrichtung) hohles Vierkantprofil mit offenen Enden 21, 22. Die Kanten 25, 26, 25, 26 parallel zur Längserstreckung L (nachfolgend "Längskanten") sind optional an der Innenseite (Innenkante) und/oder an der Aussenseite (Aussenkante) abgerundet. In alternativen Ausführungsformen kann das Aussengehäuse 2 beispielsweise auch als Hohlkörper mit drei Kanten, mit mehr als vier Kanten, mit kreisrundem, ovalem oder anders geformten Querschnitt ausgeführt sein, wobei etwaige Kanten an der Innenseite und/oder an der Aussenseite abgerundet sein können.

In bevorzugten Ausführungsformen weisen die Längskanten des Aussengehäuses 2 eine Länge von 1 mm bis 500 mm und die Kanten quer dazu eine Länge von 1 mm bis 100 mm auf.

Die Torsionsfedervorrichtung 1 umfasst ferner ein Innengehäuse 3. Bevorzugt besteht das Innengehäuse 3 aus einem Kunststoffmaterial, bevorzugt aus einem hochbelastbaren Kunststoffmaterial, insbesondere einem Material auf der Basis von Copolyestern. Gemäss einer konkreten Ausführungsform der Erfindung besteht das Innengehäuse 3 zumindest im Wesentlichen aus dem thermoplastischen Copolyester mit dem Handelsnamen Tritan® 1501. In alternativen Ausführungsformen besteht das Innengehäuse 3 zumindest im Wesentlichen aus einem niedrigschmelzenden Thermoplasten, beispielsweise aus PA12-GF50 oder PTB-GF 50. Das Aussengehäuse 2 und das Innengehäuse 3 können aus demselben Material oder aus verschiedenen Materialien bestehen. Für das Innengehäuse 3 kann ein vom Kunststoffmaterial des Aussengehäuses 2 verschiedenes Kunststoffmaterial verwendet werden. In einer alternativen Ausführungsform besteht das Innengehäuse 3 beispielsweise aus einem metallischen Material. Darüber hinaus ist es möglich, dass das Aussengehäuse 2 aus einer Kombination aus einem oder mehreren Kunststoffen und/oder einem oder mehreren Metallen oder aus einer anderen Materialkombination besteht. Wenn beispielsweise das Aussengehäuse 2 im Wesentlichen aus einem metallischen Werkstoff aufgebaut ist, ist es vorteilhaft, das elastische Element (siehe unten) hinterschnitten am Aussengehäuse 2 zu verankern.

Gemäss der vorliegenden Ausführungsform handelt es sich bei dem Innengehäuse 3 um ein Vierkantprofil. die Kanten sind optional abgerundet. In alternativen Ausführungsformen kann das Innengehäuse 2 beispielsweise auch drei Kanten oder mehr als vier Kanten aufweisen oder mit kreisrundem, ovalem oder anders geformten Querschnitt ausgeführt sein, wobei etwaige Kanten abgerundet sein können.

Das Innengehäuse 3 ist im Aussengehäuse 2 angeordnet. Dabei ragen die Enden des Innengehäuses 3 bevorzugt aus dem Aussengehäuse 2 heraus, wie in Fig. 2 dargestellt, wodurch beispielsweise die Befestigung von nicht zur Torsionsfedervorrichtung 1 gehörenden Bauteilen (beispielsweise Bauteilen einer zu federnden oder zu dämpfenden Maschine) vereinfacht wird.

Gemäss der vorliegenden Ausführungsform weist das Innengehäuse 3 eine runde Durchgangsbohrung 33 auf, welche sich parallel zu den in Längsrichtung L verlaufenden Kanten des Innengehäuses 3 (nachfolgend "Längskanten") durch das Innengehäuse 3 erstreckt. Die Durchgangsbohrung 33 dient der Verbindung des Innengehäuses 3 mit einer Welle, einer Stange oder mit Bolzen (keine Bestandteile der Torsionsfedervorrichtung 1; in den Figuren nicht dargestellt), wobei die Welle oder Stange durch die Durchgangsbohrung 33 hindurch geführt wird bzw. die Bolzen in die Durchgangsbohrung 33 eingeführt werden. In alternativen Ausführungsformen kann statt einer Durchgangsbohrung 33 auf jeder der beiden Stirnseiten des Innengehäuses 3 beispielsweise eine Sackbohrung vorgesehen sein. Optional ist es möglich, dass die Durchgangsbohrung 33 zumindest in ihren Öffnungsbereichen mit einem Innengewinde oder einer anderen Befestigungsstruktur versehen ist. Auch die genannten Sackbohrungen können zu diesem Zweck jeweils mit einem Gewinde oder einer anderen Befestigungsstruktur versehen sein. In alternativen Ausführungsformen sind statt einer runden Durchgangsbohrung 33 oder runden Sackbohrungen anders geformte Löcher (Durchgangslöcher oder Sacklöcher), beispielsweise Löcher mit polygonalem Querschnitt vorgesehen. Die Löcher dienen dabei ebenfalls der Verbindung des Innengehäuses 3 mit einem nicht zur Torsionsfedervorrichtung 1 gehörenden Bauteil wie beispielsweise einem Bauteil einer Maschine.

Gemäss vorliegender Ausführungsform weisen das Aussengehäuse 2 und das Innengehäuse 3 einander entsprechende Querschnittsformen auf, da es sich jeweils um Vierkantprofile handelt. In alternativen Ausführungsformen können Aussengehäuse 2 und Innengehäuse 3 verschiedene Formen aufweisen, beispielsweise kann ein Vierkant-Innengehäuse in ein rundes Aussengehäuse eingesetzt sein.

Gemäss vorliegender Ausführungsform ist das Innengehäuse 3 so im Aussengehäuse 2 angeordnet, dass in der Fig. 1 dargestellten Ruhelage (Auslenkung = 0 und damit Rückstellkraft = 0) die Längskanten des Innengehäuses 3 den Mittellinien zwischen den Längskanten des Aussengehäuses 2 gegenüberliegen. Das heisst wenn das Aussengehäuse 2 und das Innengehäuse 3 polygonale Profile mit n-eckigem Querschnitt sind, sind das Innengehäuse 3 und das Aussengehäuse 2 um 180°/n gegeneinander winkelversetzt. Gemäss vorliegender Ausführungsform sind Innengehäuse 3 und Aussengehäuse 2 demnach um 45° gegeneinander winkelversetzt.

Die Torsionsfedervorrichtung 1 umfasst ferner ein elastisches Element 4. Das elastische Element 4 lagert das Innengehäuse 3 vorzugsweise mittig im Aussengehäuse 2. Bei einem Verdrehen des Innengehäuses 2 und des Aussengehäuses 3 relativ zueinander ausgehend von einer Ruhelage, d.h. bei einem Verdrehen um einen Auslenkungswinkel, wird eine Rückstellkraft aufgebaut. In alternativen Ausführungsformen ist das elastische Element exzentrisch im Aussengehäuse 2 gelagert; auch in diesen Ausführungsformen wird beim Verdrehen des Innengehäuses 2 und des Aussengehäuses 3 relativ zueinander ausgehend von einer Ruhelage eine Rückstellkraft aufgebaut.

Das elastische Element 4 kleidet das Aussengehäuse 2 an den parallel zur Längsstreckung L liegenden Innenflächen zumindest teilweise aus und ummantelt das Innengehäuse 3 an den parallel zur Längsstreckung L liegenden Aussenflächen zumindest teilweise. Zwischen dem Bereich des elastischen Materials 4, das das Aussengehäuse 2 auskleidet, und dem Bereich des elastischen Materials 4, das das Innengehäuse 3 ummantelt, ist das elastische Material 4 in Form von Stegen 41, 42, 43, 44 angeordnet. Die Stege 41, 42, 43, 44 können sich über die gesamte Länge des Aussengehäuses 2 in Richtung L oder nur über einen Teil dieser Länge erstrecken. Die Stege 41, 42, 43, 44 können als in Richtung L verlaufende durchgängige Stränge gebildet sein oder Unterbrechungen aufweisen. Gemäss vorliegender Ausführungsform verbinden die Stege 41, 42, 43, 44 den Bereich der Innenkanten des Aussengehäuses 2 mit dem Bereich der Aussenflächen des Innengehäuses 3. In alternativen Ausführungsformen können die Stege 41, 42, 43, 44 beispielsweise auch den Bereich der Längskanten des Innengehäuses 3 mit dem Bereich der Innenflächen des Aussengehäuses 2 verbinden. In alternativen Ausführungsformen der Erfindung können die Stege asymmetrisch und/oder schraubenförmig angeordnet sein. Dadurch kann beispielsweise eine asymmetrische Kennlinie erreicht werden.

Das elastische Element 4 ist bevorzugt mit dem Aussengehäuse 2 und dem Innengehäuse 3 verschmolzen, d.h. das elastische Element 4 geht mit dem Aussengehäuse 2 und dem Innengehäuse 3 jeweils eine Verbindung ein. Diese Verschmelzung kann beispielsweise durch Anwendung eines Spritzgussverfahrens zur Herstellung der Torsionsfedervorrichtung 1 erreicht werden. Optional können zur Haftunterstützung Hinterschnitte für eine zusätzliche Verankerung sorgen. Es ist nicht angedacht, dass man die verschiedenen Komponenten einzeln zusammensetzen muss.

Das elastische Element 4 besteht zumindest teilweise aus einem elastischen Material, bevorzugt einem Elastomer, insbesondere einem strahlenvernetzbaren Elastomer wie beispielsweise TPE-E.

Gemäss vorliegender Ausführungsform ist das elastische Element 4 einstückig gebildet. Das elastische Element 4 kann gemäss alternativen Ausführungsformen auch aus verschiedenen Teilen zusammengesetzt sein, wobei verschiedene Teile aus demselben Material oder verschiedenen Materialien bestehen können, wobei eine ausreichende Haftung des elastischen Elements 4 an Aussengehäuse 3 und Innengehäuse 3 vorhanden ist.

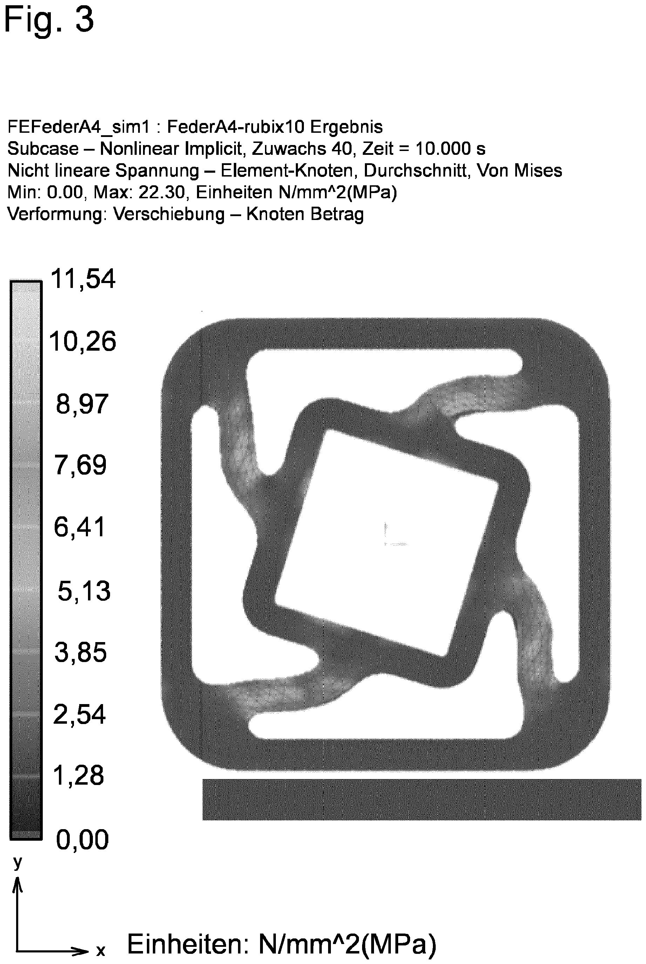

Als konkretes Beispiel ist in Fig. 3 die mittels FEM-Simulation (Simulation mittels der Finite-Elemente-Methode) erhaltene Spannungsverteilung des elastischen Elements 4 einer Torsionsfedervorrichtung 1 gemäss der ersten Ausführungsform wiedergegeben, wobei die Torsionsfedervorrichtung 1 durch Verdrehen des Aussengehäuses 2 und des Innengehäuses 3 relativ zueinander ausgelenkt ist. In der Spannungsverteilung in Fig. 3 liegen in den hellen Bereichen hohe Spannungswerte und in den dunklen Bereichen geringe Spannungswerte vor.

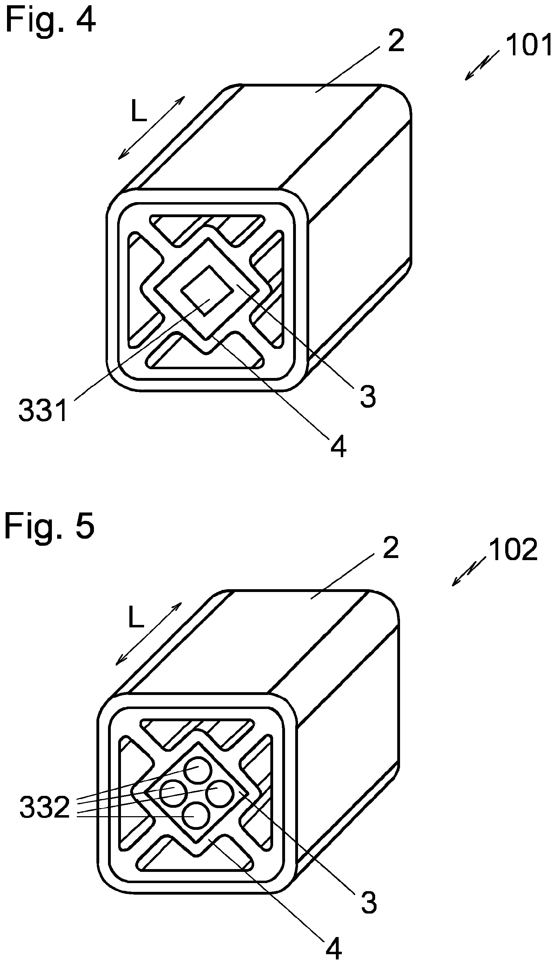

In Fig. 4 ist eine Torsionsfedervorrichtung 101 gemäss einer zweiten Ausführungsform der Erfindung in Schrägansicht dargestellt. Elemente der vorliegenden Ausführungsform, die denjenigen der ersten Ausführungsform entsprechen, werden mit denselben Bezugszeichen versehen.

Die Torsionsfedervorrichtung 101 gemäss der zweiten Ausführungsform unterscheidet sich von der Torsionsfedervorrichtung 1 der ersten Ausführungsform dahingehend, dass gemäss der zweiten Ausführungsform ein Durchgangsloch 311 oder Sacklöcher 331 mit rechteckigem, bevorzugt quadratischem Querschnitt in das Innengehäuse 3 eingelassen sind. Dadurch ist es beispielsweise möglich, eine rechteckige Welle auf einfache und gegen ein Verdrehen gesicherte Weise mit dem Innengehäuse 3 zu verbinden. In alternativen Ausführungsformen sind Durchgangslöcher oder Sacklöcher mit mit einem Querschnitt mit drei Ecken oder mit mehr als drei Ecken oder mit einem anderen Querschnitt möglich.

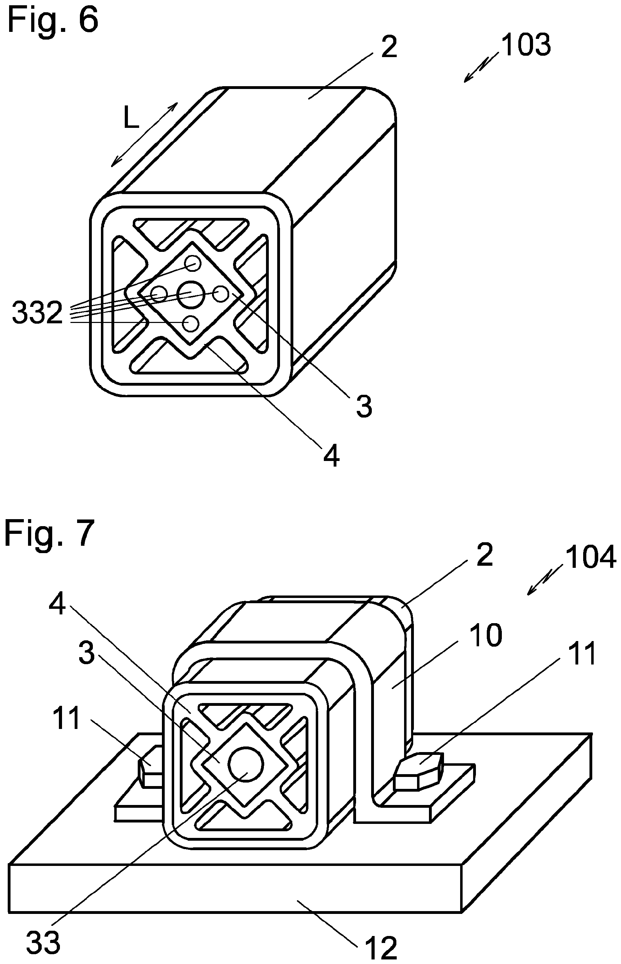

In Fig. 5 ist eine Torsionsfedervorrichtung 102 gemäss einer dritten Ausführungsform der Erfindung in Schrägansicht dargestellt. In Fig. 6 ist eine Torsionsfedervorrichtung 103 gemäss einer vierten Ausführungsform der Erfindung in Schrägansicht dargestellt. Elemente der vorliegenden Ausführungsformen, die denjenigen der obenstehend beschriebenen Ausführungsformen entsprechen, werden mit denselben Bezugszeichen versehen.

Die Torsionsfedervorrichtungen 12, 13 gemäss der dritten und vierten Ausführungsform unterscheiden sich von den Torsionsfedervorrichtungen 1, 11 gemäss den obenstehend beschriebenen Ausführungsformen dahingehend, dass gemäss der dritten und vierten Ausführungsform mehrere parallele Durchgangslöcher und/oder Sacklöcher 312 in das Innengehäuse 3 eingelassen sind. Die in den Figuren 5 und 6 dargestellten Querschnittsformen und Anordnungen der Durchgangslöcher und/oder Sacklöcher 332 sind dabei nur beispielhaft. So können auch zwei, drei oder mehr als fünf Durchgangslöcher und/oder Sacklöcher 332 vorgesehen sein. Die Durchgangslöcher und/oder Sacklöcher 332 können symmetrisch oder asymmetrisch angeordnet sein. Mehrere Durchgangslöcher und/oder Sacklöcher 332 machen es beispielsweise möglich, nicht zur Torsionsfedervorrichtung 1 gehörende Bauteile (beispielsweise Bauteile einer zu federnden oder zu dämpfenden Maschine) auf einfache und gegen ein Verdrehen gesicherte Weise mit dem Innengehäuse 3 zu verbinden.

In Fig. 7 ist eine Torsionsfedervorrichtung 104 gemäss einer fünften Ausführungsform der Erfindung dargestellt. Elemente der vorliegenden Ausführungsform, die denjenigen der obenstehend beschriebenen Ausführungsformen entsprechen, werden mit denselben Bezugszeichen versehen. Die Torsionsfedervorrichtung 104 gemäss der fünften Ausführungsform umfasst eine das Aussengehäuse 2 umgreifende Befestigungsbrücke 10, welche durch Befestigungselemente 11 an einer Basis 12 befestigt werden kann. Die Befestigungselemente 11 und die Basis 12 werden nicht als Bestandteile der Torsionsfedervorrichtung 104 betrachtet. Bei den Befestigungselementen 11 kann es sich beispielsweise um Schrauben oder Nieten handeln. Bei der Basis 12 kann es sich beispielsweise um einen Fussboden, einen ortsfest angebrachten Sockel, einen ortsfest angebrachten Träger oder ein Bauteil einer zu federnden oder zu dämpfenden Maschine handeln. Der Aufbau und die Funktion des Aussengehäuses 2, des Innengehäuses 3 und des elastischen Elements 4 entsprechen dem Aufbau und der Funktion gemäss einer der obenstehend beschriebenen Ausführungsformen. Insbesondere die in Fig. 7 dargestellte Konfiguration mit einem Durchgangsloch ist lediglich beispielhaft.

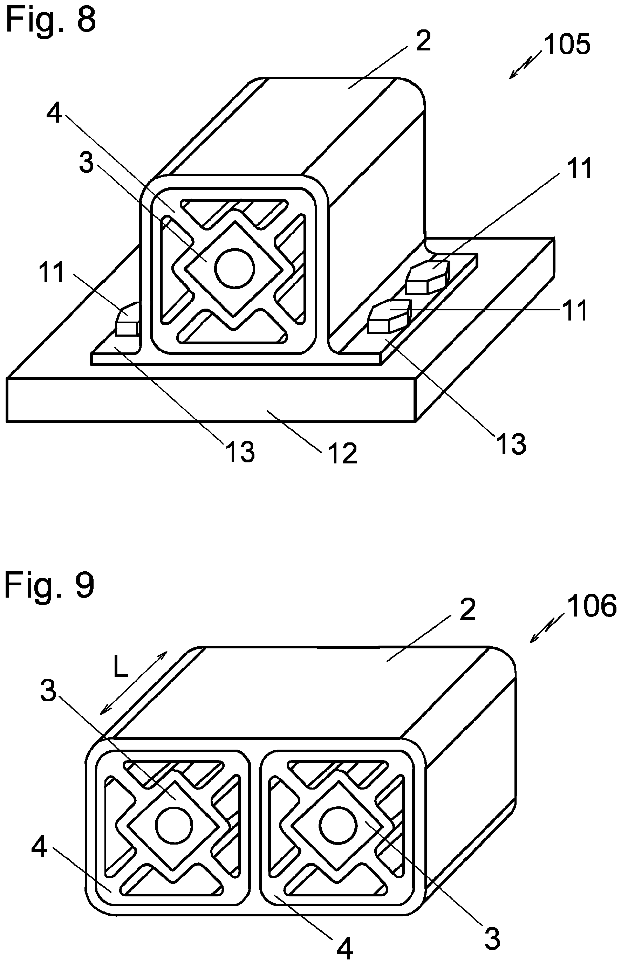

In Fig. 8 ist eine Torsionsfedervorrichtung 105 gemäss einer sechsten Ausführungsform der Erfindung dargestellt. Diese umfasst statt der Befestigungsbrücke 10 der fünften Ausführungsform Befestigungsvorsprünge 13, die so am Aussengehäuse 2 angebracht sind, dass das Aussengehäuse 2 mit Befestigungselementen 11 an der Basis 12 befestigt werden kann.

In alternativen Ausführungsformen kann die Befestigung des Aussengehäuses 2 beispielsweise durch eine Klemmfaust oder eine sonstige Klemmvorrichtung, Steckverbindungen, am Aussengehäuse 2 vorgesehene Gewindeaugen, Flansche oder durch mit dem Aussengehäuse 2 fest verbundenen Hebelarmen an der Basis 12 befestigt werden.

Die Verbindung des Innengehäuses 3 mit einem nicht zur Torsionsfedervorrichtung 1 gehörenden Bauteil wie beispielsweise einem Bauteil einer Maschine oder einer Basis 12 kann in den obenstehend beschriebenen Ausführungsformen beispielsweise durch Schraubverbindungen, Steckverbindungen, Klemmverbindungen oder Flanschverbindungen erfolgen.

In Fig. 9 ist eine Torsionsfedervorrichtung 106 gemäss einer siebenten Ausführungsform der Erfindung dargestellt. Elemente der vorliegenden Ausführungsform, die denjenigen der obenstehend beschriebenen Ausführungsformen entsprechen, werden mit denselben Bezugszeichen versehen. Die Torsionsfedervorrichtung 106 gemäss der fünften Ausführungsform weist ein Aussengehäuse 2 und zwei Innengehäuse 3 auf. Die Innengehäuse 3 sind im Aussengehäuse 2 parallel zur Längsrichtung L angeordnet. Die Torsionsfedervorrichtung 106 gemäss der vorliegenden Ausführungsform umfasst ferner zwei elastische Elemente 4. Jedes der elastischen Elemente 4 lagert eines der Innengehäuse 3 im Aussengehäuse 2. Die Torsionsfedervorrichtung 106 gemäss der vorliegenden Ausführungsform entspricht somit im Vergleich zu den obenstehend beschriebenen Ausführungsformen einer doppelten Torsionsfedervorrichtung bzw. einer parallel geschalteten Torsionsfedervorrichtung. Alternativ ist es möglich, dass beide Innengehäuse 3 von einem einzigen entsprechend geformten elastischen Element gelagert werden. Die Torsionsfedervorrichtung 106 gemäss der vorliegenden Ausführungsform eignet sich in vorteilhafter Weise für die Herstellung eines Schwingungsdämpfers. In alternativen Ausführungsformen können im Aussengehäuse 2 auch mehr als zwei Innengehäuse 3 angeordnet und von einem oder mehreren elastischen Elementen 4 gelagert werden.

Die Torsionsfedervorrichtungen gemäss einer der obenstehend beschriebenen Ausführungsformen können beispielsweise verwendet werden, um eine gefederte Lagerung bereitzustellen. Bei der gefederten Lagerung kann es sich beispielsweise um eine Pendellagerung handeln. Mit der gefederten Pendellagerung kann beispielsweise ein Motor oder eine Maschine federnd gelagert werden, was insbesondere bei Unwuchtmotoren und Rüttlern vorteilhaft ist.

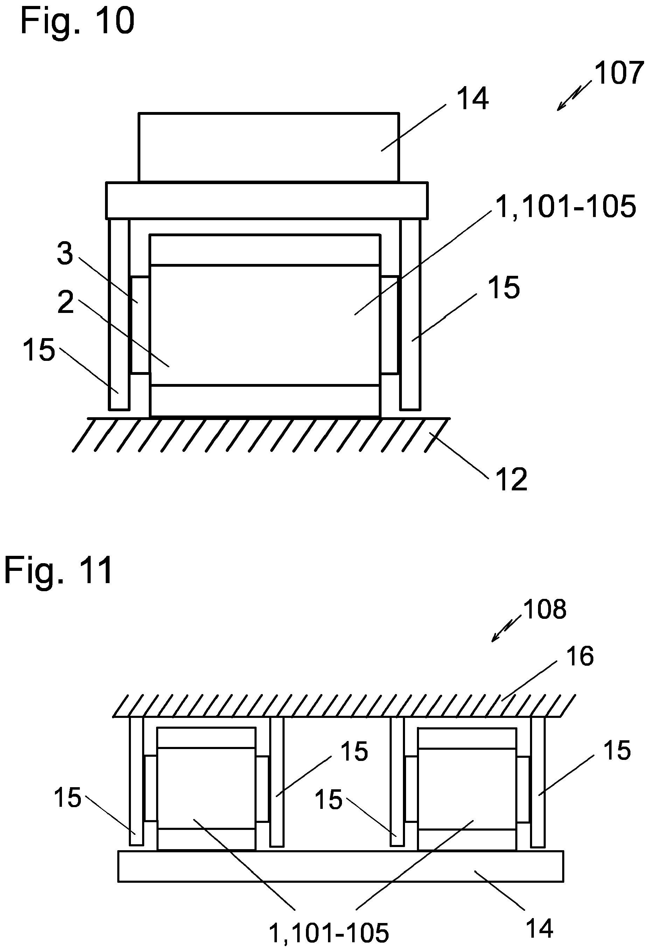

In Fig. 10 ist ein Lager 107 für ein federnd zu lagerndes Objekt 14 gemäss einer achten Ausführungsform der Erfindung dargestellt. Das Lager umfasst eine Torsionsfedervorrichtung 1,101-105. Das Objekt 14 ist über eine Aufhängung 15 mit dem Innengehäuse 3 verbunden, wobei diese Verbindung bevorzugt starr ist. Das Aussengehäuse 2 ist mit einer ortsfesten Basis 12, beispielsweise einem Fussboden verbunden. Bei einer Auslenkung durch ein Verdrehen des Aussengehäuses 2 und des Innengehäuses 3 relativ zueinander wird eine Rückstellkraft aufgebaut. Es bewirkt eine federnde Lagerung des Objekts 14.

In alternativen Ausführungsformen der Erfindung kann das Lager auch in umgekehrter Weise aufgebaut sein, indem das Objekt 14 mit dem Aussengehäuse 2 und die Basis 12 mit dem Innengehäuse 3 verbunden werden.

In Fig. 11 ist ein Schwingungsdämpfer 108 zur schwingungsgedämpften Lagerung eines Objekts 14 gemäss einer neunten Ausführungsform der Erfindung dargestellt. Der Schwingungsdämpfer umfasst mehrere Torsionsfedervorrichtungen 1,101-105 als Schwingungsdämpfer. Die Innengehäuse 3 der Torsionsfedervorrichtungen 1,101-105 sind über Aufhängungen 15 mit einem Plafond 16, einem ortsfest angeordneten Träger 16 oder Ähnlichem verbunden. Das Objekt 14 ist mit den Aussengehäusen 3 der Torsionsfedervorrichtungen 1,101-105 verbunden. Bei einer Auslenkung durch ein Verdrehen der Aussengehäuses 2 und der Innengehäuses 3 relativ zueinander infolge einer Schwingung des Objekts 14 werden Rückstellkräfte aufgebaut. Diese bewirken eine Schwingungsdämpfung.

In alternativen Ausführungsformen der Erfindung kann der Schwingungsdämpfer 108 auch in umgekehrter Weise aufgebaut sein, in dem das Objekt 14 mit den Innengehäusen 3 und der Plafond 16 oder der Träger 16 mit den Aussengehäusen 2 verbunden ist.

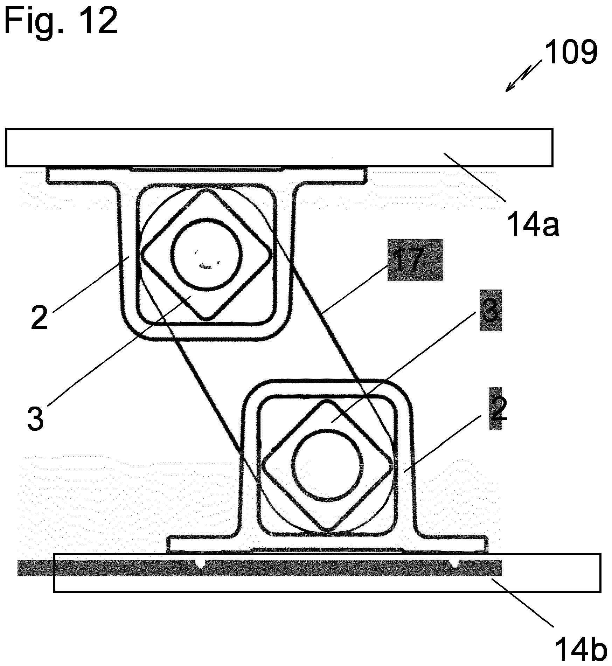

In Fig. 12 ist ein Schwingungsdämpfer 109 zur schwingungsgedämpften Lagerung zweier Objekte 14a, 14b relativ zueinander gemäss einer zehnten Ausführungsform der Erfindung dargestellt. Die Objekte 14a, 14b sind jeweils mit dem Aussengehäuse 2 einer Torsionsfedervorrichtung 1,101-105 verbunden. Bei einem der Objekte 14a, 14b kann es sich auch um einen Plafond, einen Fussboden, einen ortsfest angeordneten Träger oder Ähnliches handeln. Die Innengehäuse 3 der Torsionsfedervorrichtungen 1,101-105 sind beispielsweise mit einer Platte 17 starr miteinander verbunden. Bei Auslenkungen durch ein Verdrehen der Aussengehäuse 2 und der Innengehäuse 3 relativ zueinander infolge von Schwingungen der Objekte 14a, 14b werden Rückstellkräfte aufgebaut. Diese bewirken eine Schwingungsdämpfung. Die elastischen Elemente 4 der Torsionsfedervorrichtungen 1,101-105 sind in Fig. 12 nicht dargestellt.

In alternativen Ausführungsformen der Erfindung kann ein Schwingungsdämpfer zur schwingungsgedämpften Lagerung zweier Objekte relativ zueinander auch eine Torsionsfedervorrichtung mit einem Aussengehäuse2 und mehreren Innengehäusen 3, beispielsweise eine Torsionsfedervorrichtung 106 gemäss der siebenten Ausführungsform der Erfindung, umfassen. Die schwingungsgedämpft zu lagernden Objekte sind jeweils über Aufhängungen mit einem der Innengehäuse 3 verbunden. Bei Auslenkungen durch ein Verdrehen des Aussengehäuses 2 und der Innengehäuse 3 relativ zueinander infolge von Schwingungen der zu schwingungsgedämpft lagernden Objekte werden Rückstellkräfte aufgebaut. Diese bewirken eine Schwingungsdämpfung.

Weitere Anwendungsbeispiele für Lager und Schwingungsdämpfer unter Verwendung der erfindungsgemässen Torsionsfedervorrichtung bestehen unter anderem bei Stossdämpfern, bei der Lagerung eines Mischerarms, beispielsweise eines Betonmischers, bei der Lagerung von Druckrollen, bei Federgelenken, bei der Lagerung von Bandabstreifern, bei Pendelgelenken, bei Anschlagpuffern und Prallplatten, bei Kranaufhängungen, bei der Vibrationsisolierung, beispielsweise der Vibrationsisolierung eines Schaltkastens, bei der Lagerung von Riemenspannern und Kettenspannern, bei Einzelradaufhängungen, bei Gondellagern, bei Motorwippen, bei der Lagerung und/oder Schwingungsdämpfung von Schwingförderrinnen und Führungsschienen, bei Federelementen von Klinken, bei Tragrollenfederungen, bei Kinderwagenfederungen, Babywippen, in der Robotik, bei Federelementen von Greifarmen, bei der Lagerung von Gleisstopfvorrichtungen, in der Lebensmittelindustrie.

Durch die Wahl geeigneter Materialien für das Aussengehäuse 2, das Innengehäuse 3 sowie das elastische Element 4 und/oder durch die Wahl einer geeigneten Geometrie des Aussengehäuses 2, des Innengehäuses 3 sowie des elastischen Elements 4 lassen sich die Rückstellkraft-Auslenkungs-Kurve und die Hysterese der erfindungsgemässen Torsionsfedervorrichtung, des erfindungsgemässen Lagers und des erfindungsgemässen Schwingungsdämpfers an die jeweilige Anwendung anpassen.

## Patentansprüche

1. Torsionsfedervorrichtung (1, 101-106) umfassend
- ein Aussengehäuse (2),
- ein im Aussengehäuse (2) angeordnetes Innengehäuse (3) und
- ein elastisches Element (4), welches das Innengehäuse (3) relativ zum Aussengehäuse (3) so lagert, dass bei einer Auslenkung durch ein Verdrehen des Aussengehäuses (2) und des Innengehäuses (3) relativ zueinander eine Rückstellkraft zwischen dem Aussengehäuse (2) und dem Innengehäuse (3) aufgebaut wird,
**dadurch gekennzeichnet, dass**
die Rückstellkraft-Auslenkungs-Kurve durch eine Wahl von Form und/oder Material des Aussengehäuses (2), des Innengehäuses (3) und des elastischen Elements (4) einstellbar ist und/oder dass die Hysterese durch eine Wahl von Form und/oder Material des Aussengehäuses (2), des Innengehäuses (3) und des elastischen Elements (4) einstellbar ist.

2. Torsionsfedervorrichtung (1, 101-106) umfassend
- ein Aussengehäuse (2),
- ein im Aussengehäuse (2) angeordnetes Innengehäuse (3) und
- ein elastisches Element (4), welches das Innengehäuse (3) relativ zum Aussengehäuse (3) so lagert, dass bei einer Auslenkung durch ein Verdrehen des Aussengehäuses (2) und des Innengehäuses (3) relativ zueinander eine Rückstellkraft zwischen dem Aussengehäuse (2) und dem Innengehäuse (3) aufgebaut wird,
**dadurch gekennzeichnet, dass**
das elastische Element (4) einstückig gebildet ist.

3. Torsionsfedervorrichtung (1, 101-106) gemäss einem der vorstehenden Ansprüche, wobei das Aussengehäuse (2) zumindest teilweise aus mindestens einem Kunststoffmaterial besteht.

4. Torsionsfedervorrichtung (1, 101-106) gemäss vorstehendem Anspruch, wobei das Kunststoffmaterial des Aussengehöuses (2) mindestens einen Copolyester umfasst, welcher bevorzugt ein thermoplastischer Copolyester ist, welcher mehr bevorzugt ein niedrigschmelzender thermoplastischer Copolyester ist.

5. Torsionsfedervorrichtung (1, 101-106) gemäss einem der vorstehenden Ansprüche, wobei das Innengehäuse (2) zumindest teilweise aus mindestens einem Kunststoffmaterial besteht.

6. Torsionsfedervorrichtung (1, 101-106) gemäss vorstehendem Anspruch, wobei das Kunststoffmaterial des Innengehäuses (3) mindestens einen Copolyester umfasst, welcher bevorzugt ein thermoplastischer Copolyester ist, welcher mehr bevorzugt ein niedrigschmelzender thermoplastischer Copolyester ist.

7. Torsionsfedervorrichtung (1, 101-106) gemäss einem der vorstehenden Ansprüche, wobei das Aussengehäuse (2) und das Innengehäuse (3) das gleiche Material, bevorzugt das gleiche Kunststoffmaterial, umfassen.

8. Torsionsfedervorrichtung (1, 101-106) gemäss einem der vorstehenden Ansprüche, wobei das Aussengehäuse (2) und das Innengehäuse (3) verschiedene Materialien, bevorzugt verschiedene Kunststoffmaterialien, umfassen.

9. Torsionsfedervorrichtung (1, 101-106) gemäss einem der vorstehenden Ansprüche, wobei das elastische Element (4) ein elastisches Material, bevorzugt ein Elastomer, umfasst, wobei es sich bei dem Elastomer weiter bevorzugt um ein strahlenvernetzbares Elastomer, am meisten bevorzugt um TPE-E, handelt.

10. Torsionsfedervorrichtung (1, 101-106) gemäss einem der vorstehenden Ansprüche, wobei ein erster Bereich des elastischen Elements (4) das Aussengehäuse (2) an dessen Innenflächen zumindest teilweise auskleidet, wobei ein zweiter Bereich des elastischen Elements (4) das Innengehäuse (3) an dessen Aussenflächen zumindest teilweise ummantelt und wobei zwischen dem ersten und dem zweiten Bereich des elastischen Materials (4) ein dritter Bereich des elastischen Materials (4) in Form von Stegen (41, 42, 43, 44) angeordnet ist.

11. Torsionsfedervorrichtung (1, 101-106) gemäss vorstehendem Anspruch, wobei die Stege (41, 42, 43, 44) als durchgängige Stränge gebildet sind und/oder wobei die Stege schraubenförmig angeordnet sind.

12. Torsionsfedervorrichtung (1, 101-106) gemäss Anspruch 10 oder Anspruch 11, wobei sich die Stege (41, 42, 43, 44) vom Bereich der Innenkanten des Aussengehäuses (2) zum Bereich der Aussenflächen des Innengehäuses (3) erstrecken.

13. Torsionsfedervorrichtung (1, 101-106) gemäss einem der vorstehenden Ansprüche, wobei das elastische Element 4 mit dem Aussengehäuse 2 und dem Innengehäuse 3 verschmolzen ist, wobei optional zur Haftunterstützung Hinterschnitte am Aussengehäuse 2 und/oder am Innengehäuse 3 vorgesehen sind.

14. Torsionsfedervorrichtung (1, 101-106) gemäss einem der vorstehenden Ansprüche, wobei es sich bei dem Aussengehäuse (2) um ein hohles Mehrkantprofil mit offenen Enden (21, 22) handelt, wobei das Mehrkantprofil bevorzugt einen polygonalen, n-eckigen Querschnitt aufweist, wobei n mehr bevorzugt aus der aus 3, 4 und 6 bestehenden Gruppe ausgewählt ist, wobei n noch mehr bevorzugt 4 ist.

15. Torsionsfedervorrichtung (1, 101-106) gemäss einem der vorstehenden Ansprüche, wobei es sich bei dem Innengehäuse (3) um ein im Inneren des Aussengehäuses (2) angeordnetes Mehrkantprofil handelt, wobei das Mehrkantprofil bevorzugt einen polygonalen, n-eckigen Querschnitt aufweist, wobei n mehr bevorzugt aus der aus 3, 4 und 6 bestehenden Gruppe ausgewählt ist, wobei n noch mehr bevorzugt 4 ist.

16. Torsionsfedervorrichtung (1, 101-106) Anspruch 14 und Anspruch 15, wobei das Aussengehäuse (2) und das Innengehäuse (3) Mehrkantprofile mit jeweils polygonalem, n-eckigem Querschnitt sind, wobei n für das Aussengehäuse (2) und das Innengehäuse (3) denselben Wert aufweist, und wobei das Aussengehäuse (2) und das Innengehäuse (3) bevorzugt um 180°/n bezüglich einer gemeinsamen Längsachse gegeneinander winkelversetzt sind.

17. Torsionsfedervorrichtung (1, 101-106) gemäss einem der vorstehenden Ansprüche, wobei das Innengehäuse (3) mindestens eine Durchgangsbohrung (33, 332) und/oder ein Durchgangsloch (331,332) und/oder Sacklöcher (33, 331, 332) zur Verbindung des Innengehäuses (3) mit einem nicht zur Torsionsfedervorrichtung 1 gehörenden Bauteil aufweist.

18. Torsionsfedervorrichtung (1, 101-106) gemäss einem der vorstehenden Ansprüche, wobei die Torsionsfedervorrichtung (1, 101-106) mittels eines Spritzgussverfahrens hergestellt ist.

19. Lager (107) für ein federnd zu lagerndes Objekt (14) umfassend mindestens eine Torsionsfedervorrichtung (1,101-106) gemäss einem der Ansprüche 1 bis 18.

20. Schwingungsdämpfer (108) zur schwingungsgedämpften Lagerung eines oder mehrerer Objekte (14, 14a. 14b) umfassend mindestens eine Torsionsfedervorrichtung (1,101-106), bevorzugt mindestens zwei Torsionsfedervorrichtungen (1,101-106) gemäss einem der Ansprüche 1 bis 18.
